# EUROPEAN PATENT SPECIFICATION

(11) **EP 4 110 704 B1**
(45) Date of publication and mention of the grant of the patent: **24.09.2025**
(21) Application number: 21713742.1
(22) Date of filing: 26.02.2021
(51) Int. Cl.: B65D 5/50, A21C 15/00, A23G 3/28, B65D 30/28, B65D 75/38, B65D 83/00, B65D 75/58

(54) **A CONTAINER FOR CONTAINING AND DISPENSING SEMI-LIQUID SUBSTANCES AND KIT COMPRISING SAID CONTAINER**
BEHÄLTER ZUR AUFNAHME UND ABGABE VON HALBFLÜSSIGEN SUBSTANZEN UND KIT MIT DIESEM BEHÄLTER
CONTENANT PERMETTANT DE CONTENIR ET DE DISTRIBUER DES SUBSTANCES SEMI-LIQUIDES ET KIT COMPRENANT LEDIT CONTENANT

(30) Priority: 27.02.2020 IT 202000004096
(43) Date of publication of application: 04.01.2023
(73) Proprietor: Unifarco S.p.A., 32035 Santa Giustina (BL) (IT)
(72) Inventor: BARATTO, Giovanni, 32035 Santa Giustina BL (IT); SEMENZATO, Alessandra, 32035 Santa Giustina BL (IT); SCATTO, Marco, 32035 Santa Giustina BL (IT); COSTANTINI, Alessia, 32035 Santa Giustina BL (IT); GATTI, Nicola, 32035 Santa Giustina BL (IT)
(74) Representative: Perani & Partners S.p.A.
(86) International application number: PCT/IB2021/051605
(87) International publication number: WO 2021/171236

(56) References cited:
- EP-A2- 1 714 892
- GB-A- 2 455 599
- US-A- 2 735 606
- US-A- 3 481 075
- US-A1- 2004 124 210
- US-A1- 2010 192 520
- US-A1- 2019 373 911
- US-A9- 2017 113 845
- US-B1- 8 201 709

## Description

### Field of the invention

The present invention relates to a container for containing and dispensing semi-liquid substances and a kit comprising such container. This container is namely used in the cosmetic field for containing and dispensing, for example, cosmetic products.

### Background art

A container for containing and dispensing cosmetic products is known in the art. This container comprises a container body configured to contain a semi-liquid substance and having an opening that can be reversibly closed by a cap. After removing the cap that covers the opening and pressing the container body, the semi-liquid substance contained therein may be dispensed through the opening.
The container of the prior art is entirely made of polymeric material. Polymeric materials exhibit high compatibility with the chemical composition of the cosmetic products, and are thus able to preserve the cream in the container for a long time. A disposable bag-type container is also known in the art for dispensing pastry creams to garnish and decorate cakes or the like. Such bag-type containers are commonly known as pastry bags. Namely, these bag-type containers comprise a containing portion configured to contain the cream, a fill opening through which the cream is introduced into the containing portion, and a pierceable dispensing portion to form a dispensing opening. In the prior art, such bag-type containers are made of polymeric material or biodegradable material. An example of bag-type container made of biodegradable material can be found in document US2010/192520A1.

Once the containing portion has been filled with the cream and the dispensing opening has been formed, the containing portion may be pressed to dispense the cream therein through the dispensing opening.

A further example of a container for dispensing semi-liquid substances is disclosed in US2017/113845A9. Namely, US2017/113845A9 discloses a container comprising a bag-like body, made of plastic or aluminum film. <insert page 2a>

### Problem of the prior art

Once all the cosmetic cream in the prior art polymeric container has been used, this container is not easily disposable. Polymeric materials are known to be hardly recyclable and, in addition, separate waste collection is not always adequately carried out to afford total recycling of polymeric materials. As a result, most of prior art containers, when all the cream therein has been used, are carried to landfills and incinerators, which entails a considerable negative impact on the environment.

On the other hand, the bag-type container of the prior art can be only used for dispensing the cream and not for preserving the cream therein. That is, the dispensing opening cannot be stably closed once a supply of cream has been introduced in its containing portion, and must be fully dispensed through the dispensing opening.

In addition, due to the reduced thickness of the walls of the containing portion of the bag-type container, such bag-type container is often difficult to handle, resulting in a difficult and uneven dispensing of cream through the dispensing opening. Therefore, such bag container is inadequate for use in the field of cosmetic products.

### Summary of the invention

Here, the technical purpose of the present invention is to provide a container for containing and dispensing semi-liquid substances and a kit comprising such container that can overcome the drawbacks of the prior art.

In the prior art, the containers for dispensing semi-liquid substances can also comprise an external support body which is stiffer than the bag-type container, as disclosed in EP1714892A2, US8201709B1, and US2019/373911A1.

Furthermore, it is also known having a base comprising a seat in which the external body support can be accommodated, as disclosed, for instance, in document US3481075A.

In particular, an object of the present invention is to provide a container for containing and dispensing semi-liquid substances that do not impact the environment once the semi-liquid substance contained therein has been used.

Furthermore, an object of the present invention is to provide a user-friendly container that can adequately preserve a semi-liquid substance, and ensure that it keeps its organoleptic characteristics and its physico-chemical stability.

Finally, an object of the present invention is to provide a kit comprising such container for containing and dispensing semi-liquid substances.

The aforementioned technical purpose and objects are substantially fulfilled by a container for containing and dispensing semi-liquid substances that comprises the technical features as disclosed in one or more of the appended claims and by a kit comprising the technical features as disclosed in one or more of the appended claims.

### Advantages of the Invention

A preferred embodiment of the invention can provide a container for containing and dispensing semi-liquid substances that is entirely recyclable by separate collection as organic waste.

The preferred embodiment of the invention can also provide a container that can preserve a semi-liquid substance and is easy to handle by a user.

### BRIEF DESCRIPTION OF THE DRAWINGS

Further features and advantages of the present invention will result more clearly from the illustrative, non-limiting description of a preferred, non-exclusive embodiment of a container for containing and dispensing semi-liquid substances and a kit comprising such container as shown in the annexed drawings, in which:
- Figure 1 is a perspective view of the container of the present invention;
- Figure 2 is an exploded perspective view of the container of Figure 1;
- Figure 3 is a perspective view of an alternative embodiment of the container of Figure 1;
- Figure 4 is a perspective view of a detail of the container of Figure 3;
- Figure 5 is a perspective view of a component of the kit of the present invention;
- Figure 6 is a view of the blank of the component of Figure 5.

### DETAILED DESCRIPTION

Particularly referring to the accompanying drawings, numeral 1 designates a container for containing and dispensing semi-liquid substances, in particular viscous substances. This container 1 comprises a bag-like body 2 made of biodegradable material that can be compostable and configured to contain a semi-liquid substance. For example, such a bag-like body 2 is configured to contain a cosmetic cream.

Preferably, the bag-like body 2 is formed from a film of biodegradable compostable material.

The bag-like body 2 has a dispensing portion 23 that can be pierced to define a dispensing opening. For example, such dispensing portion 23 can be pierced by a piercing tool such as a pointed and/or sharp element. Before piercing the dispensing portion 23, the bag-like body 2 is closed, thus allowing the semi-liquid substance in the bag-like body 2 to be preserved. At first use or during manufacture, the dispensing portion 23 is pierced using a piercing tool to define the dispensing opening, from which the semi-liquid substance can be dispensed.

In addition, the container 1 comprises a support body 3 made of a compostable biodegradable material whose stiffness is greater than the stiffness of the bag-like body 2. This support body 3 is located outside the bag-like body 2 and is coupled to such bag-like body 2 to at least partially cover it. In other words, this bag-like body 2 is placed inside the support body 3. Advantageously, the support body 3 acts to stiffen such bag-like body 2, thus affording greater stability of the container 1.

The bag-like body 2 and the support body 3 are able to be pressed to dispense the semi-liquid substance through the dispensing opening. In other words, during use, the user exerts a pressure on the support body 3, and therefore on the bag-like body 2 contained therein, to cause the semi-liquid substance in the bag-like body 2 to flow out of the dispensing opening.

It should be also noted that the bag-like body 2 and the support body 3 are entirely made of a compostable biodegradable material. As a result, once all the semi-liquid substance in the bag-like body 2 has been used, the container 1 can be entirely recycled by separate collection as organic waste. Advantageously, the container 1 does not adversely affect the environment.

According to a preferred embodiment of the invention, the bag-like body 2 extends in a longitudinal direction of development X-X and comprises a closure portion 21 located on the side opposite to the dispensing portion 23 in the longitudinal direction of development X-X. The semi-liquid substance is introduced into the bag-like body 2 through a fill opening (not shown in the accompanying figures) of the bag-like body 2 located at the closure portion 21. Preferably, after introducing the semi-liquid substance into the bag-like body 2, the closing portion 21 is heat-sealed to irreversibly close the fill opening. As a result, the semi-liquid substance in the bag-like body 2 is preserved until the delivery opening is defined.

Still according to the preferred embodiment of the invention, the bag-like body 2 comprises a containing portion 22 interposed between the closing portion 21 and the dispensing portion 23 and containing the semi-liquid substance.

According to a preferred aspect, the support body 3 entirely covers the containing portion 22 of the bag-like body 2. In other words, the support body 3 is located outside the containing portion 22 of the bag-like body 2 and is coupled to such bag-like body 2 to entirely cover the containing portion 22 of the bag-like body 2. Advantageously, the support body 3 acts to stiffen the containing portion 22 of the bag-like body 2, thus imparting greater stability to such containing portion 22.

According to the invention, the support body 3 extends between a lower portion 31 and an opposite upper portion 32 in the longitudinal direction of development X-X. In addition, the support body 3 comprises a through cavity 33, which extends between the lower portion 31 and the upper portion 32 and is delimited by an inner wall 34 of the support body 3. In other words, the through cavity 33 extends between a lower opening 35 located at the lower portion 31 and an upper opening 36 located at the upper portion 32 along the longitudinal direction of development X-X.

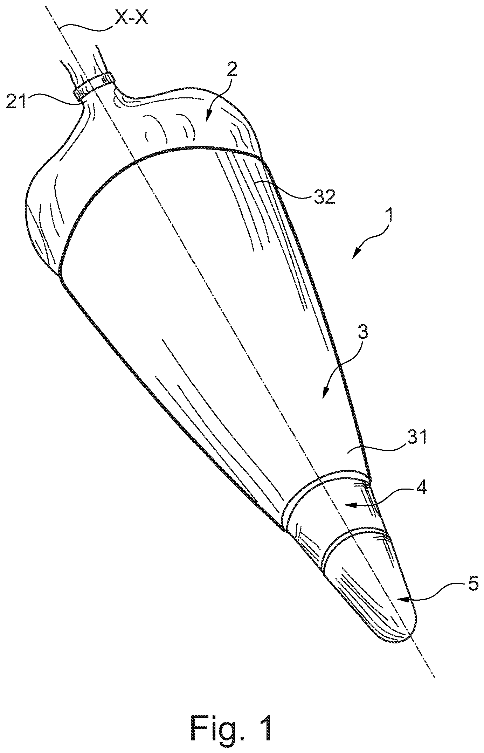

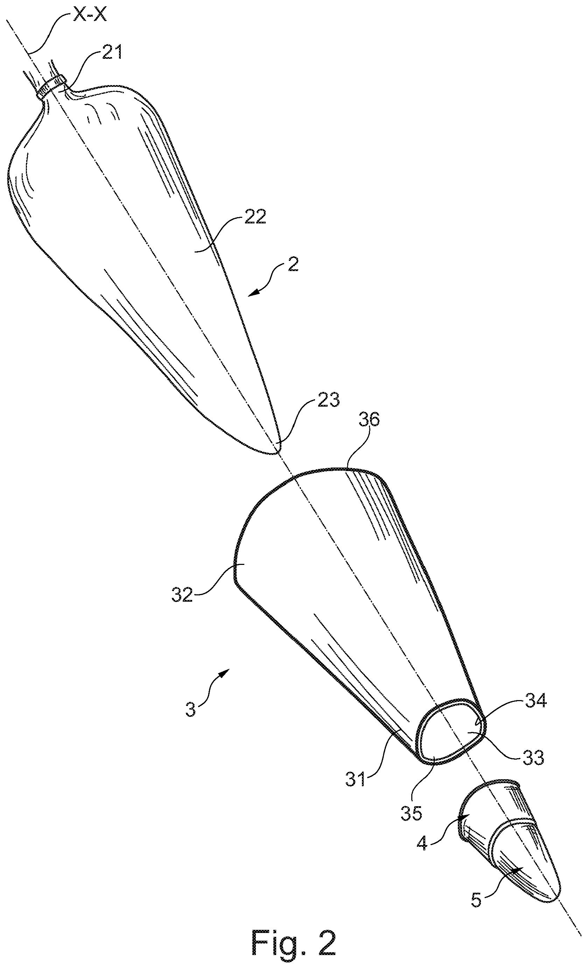

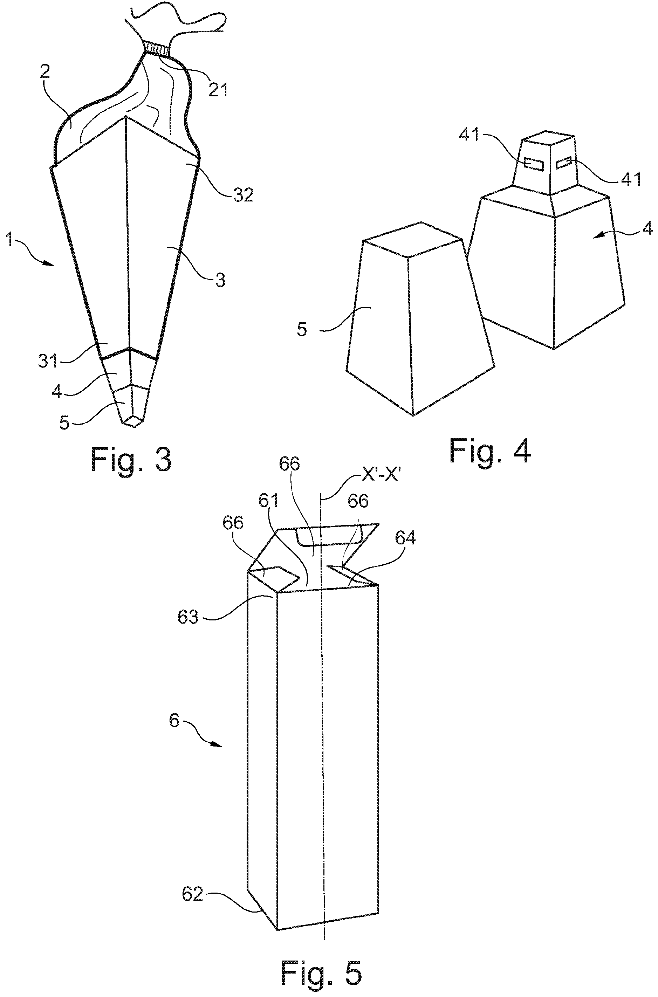

Preferably, as shown in Figures 1 and 2, the support body 3 has a frustoconical shape. Alternatively, as shown in Figure 3, the support body 3 has a frustopyramidal shape.

The containing portion 22 is coupled to the inner wall 34 of the support body 3 such that the dispensing portion 23 of the bag-like body 2 will be located at the lower portion 31 of the support body 3. In other words, the bag-like body 2 is arranged inside the through cavity 33 with the dispensing portion 23 located at the lower opening 35 of the through cavity 33. Then, the dispensing portion 23 can be accessed through the lower opening 35 of the through cavity 33. Preferably, the dispensing portion 23 protrudes out of the lower opening 35 of the through cavity 33.

Preferably, the containing portion 22 of the bag-like body 2 is coupled to the inner wall 34 of the support body 3 by means of adhesive material.

According to the preferred embodiment of the invention, the container 1 comprises a dispenser 4 that is coupled to the lower portion 31 of the support body 3. This dispenser 4 is coupled to the lower portion 31 of the support body 3 so as to close the lower opening 35 of the through cavity 33.

This dispenser 4 comprises at least one opening 41 for the semi-liquid in the bag-like body 2 to be dispensed through such opening 41. Therefore, the opening 41 of the dispenser 4 is in fluid communication with the dispensing opening of the bag-like body 2. During use, the user presses the support body 3 and the bag-like body 2, thereby causing the semi-liquid substance in the bag-like body 2 to flow out through the dispensing opening of the bag-like body 2 and then through the opening 41 of the dispenser 4.

Preferably, the dispenser 4 is coupled to the lower portion 31 of the support body 3 by heat-sealing. Alternatively, the dispenser 4 is screwed to the lower portion 31 of the support body 3.

It should be noted that in the embodiment in which the dispenser 4 is heat-sealed to the lower portion 31, the dispensing portion 23 of the bag-like body 2 can be pierced by introducing the piercing tool through the opening 41 of the dispenser 4.

More preferably, the dispenser 4 comprises a plurality of openings 41.

It should be further noted that in the embodiment in which the support body 3 has a frustoconical shape, the dispenser 4 also has a frustoconical shape. On the other hand, in the embodiment in which the support body 3 has a frustopyramidal shape, the dispenser 4 also has a frustopyramidal shape. In other words, the dispenser 4 has the same shape as the support body 3 for easier coupling to such support body 3.

In addition, the container 1 comprises a cap 5 for reversibly closing the opening 41 of the dispenser 4. This cap 5 can be reversibly coupled to the dispenser 4 to cover the opening 41 of the dispenser 4.

Preferably, the bag-like body 2 is made of a compostable biopolymer. More preferably, this compostable biopolymer has oxygen barrier properties. Therefore, the compostable biopolymer can effectively preserve the semi-liquid substance contained in the bag-like body 2.

Still preferably, the support body 3 is made of a compostable biodegradable paper. This compostable biodegradable paper has a basis weight of 80 g/cm². Advantageously, the support body 3 made of compostable biodegradable paper facilitates handling of the container 1 by a user. **In** other words, the support body 3 made of compostable biodegradable paper enhances the grip on the container 1 by a user.

Also, an object of the present invention is a kit for containing semi-liquid substances. This kit comprises a container 1 as described above in any of its embodiments.

**In** addition, the kit comprises a package 6 comprising an inner cavity 61 that can be reversibly closed. The container 1 is adapted to be accommodated in such inner cavity 61. Therefore, the package 6 affords easy transport of the container 1 and arrangement of such container 1 in shelves. Thus, once the container 1 has been introduced into the inner cavity 61, the inner cavity 61 is closed and the package 6 can be easily transported, while also avoiding any impact and damage on the container 1.

Preferably, the package 6 is made of a recyclable material, e.g. recyclable paper or plastic.

It should be noted that both the biodegradable compostable paper that can be used to form the support body 3 and the recyclable paper that can be used to form the package 6 can be made are certified with the Forest Stewardship Council (FSC).

According to the preferred embodiment, the package 6 extends between a base 62 and an opposite top 63 in a further longitudinal direction of development X'- X'. The inner cavity 61 extends between the base 62 and an upper opening 64 located at the top 63. The package 6 further comprises a plurality of folding flaps 66 arranged at the top 63. Such folding flaps 66 are adapted to be placed one on top of another, and locked in overlapped relationship to reversibly close the upper opening 64 of the package 6 and therefore the inner cavity 61.

It shall be noted that the container 1 can be introduced into the inner cavity 61 of the package 6 so that the longitudinal direction of development X-X coincides with the additional longitudinal direction of development X'-X'. That in, the package 6 comprises a seat located in the inner cavity 61 at the base 62. The lower portion 31 of the support body 3 can be stably accommodated inside this seat. In the embodiment in which the container 1 comprises the dispenser 4, said dispenser 4 can be also stably accommodated inside the seat.

According to an alternative embodiment of the package 6, the package 6 has a support opening 67 interposed between the base 62 and the top 63 of the package 6. This support opening 67 allows access to the inner cavity 61 of the package 6. Preferably, such support opening 67 is delimited by a wedge-shaped peripheral edge.

It shall be noted that, if the package 6 has the support opening 67, the container 1 can be introduced into the cavity 61 of the package 6 such that the lower portion 31 of the support body 3 is at least partly accommodated inside the support opening 67. In the embodiment in which the container 1 comprises the dispenser 4 and the cap 5, the dispenser 4 and the cap 5 can be also stably accommodated at least partially inside the support opening 67 of the package 6. In other words, if the package 6 has a support opening 67, when the container 1 is accommodated inside the cavity 61 of the package 6, the lower portion 31 of the support body 3 and/or the dispenser 4 and/or the cap 5 protrude at least partially out of the package 6 through the support opening 67.

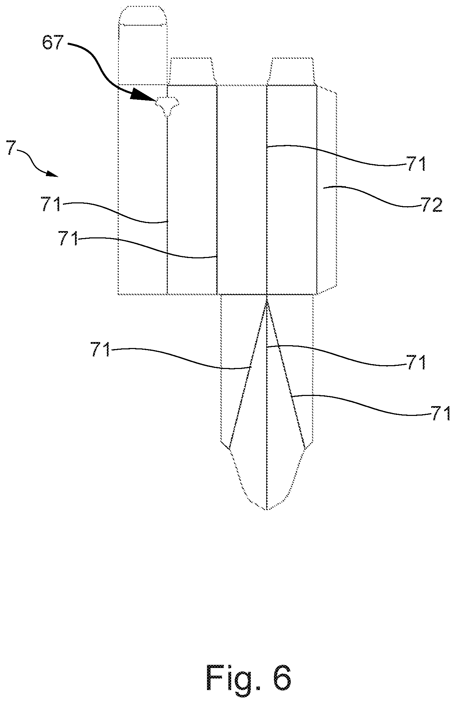

Preferably, the package 6 has a parallelepiped shape. More preferably, the package 6 is formed from a single blank 7, as shown in Figure 6. This blank 7 has a plurality of fold lines 71 and a first bonding portion 72 and a second bonding portion (not shown in the accompanying drawings). The package is defined by folding the blank at the fold lines 71 and bonding the first bonding portion 72 to the second bonding portion. It shall be also noted that, by folding the folding lines 71, the seat of the package 6 is also defined.

## Claims

1. A container (1) for containing and dispensing semi-liquid substances, comprising:
- a bag-like body (2) configured to contain a semi-liquid substance, said bag-like body (2) having a dispensing portion (23) adapted to be pierced to define a dispensing opening;
- a support body (3) made of a compostable biodegradable material and whose stiffness is greater than the stiffness of the bag-like body (2), said support body (3) being arranged outside said bag-like body (2) and being coupled to said bag-like body (2) such that it at least partially covers it, the bag-like body (2) and the support body (3) being compressible to dispense the semi-liquid substance through the dispensing opening,
**characterized in that**:
- the bag-like body (2) is made of a compostable biodegradable material,
- the support body (3) extending between a lower portion (31) and an opposite upper portion (32) in a longitudinal direction of development (X-X),
- the support body (3) comprises a through cavity (33), which extends between the lower portion (31) and the upper portion (32) and is delimited by an inner wall (34) of the support body (3).

2. A container as claimed in claim 1, wherein said bag-like body (2) extends in the longitudinal direction of development (X-X) and comprises:
- a closure portion (21) located on the side opposite to the dispensing portion (23) in the longitudinal direction of development (X-X);
- a containing portion (22) interposed between the closure portion (21) and the dispensing portion (23) and containing the semi-liquid substance.

3. A container (1) as claimed in claim 2, wherein the support body (3) entirely covers the containing portion (22) of the bag-like body (2).

4. A container (1) as claimed in claim 2 or 3, wherein:
- the containing portion (22) is coupled to the inner wall (34) of the support body (3) such that the dispensing portion (23) of the bag-like body (2) will be located at the lower portion (31) of the support body (3).

5. A container (1) as claimed in claim 4, wherein the containing portion (22) of the bag-like body (2) is coupled to the inner wall (34) of the support body (3) by means of adhesive material.

6. A container (1) as claimed in claim 4 or 5, comprising a dispenser (4) coupled to the lower portion (31) of the support body (3), said dispenser (4) comprising at least one opening (41), allowing the semi-liquid substance contained in the bag-like body (2) to be dispensed through said opening (41).

7. A container (1) as claimed in claim 6, wherein the dispenser (4) is coupled to the lower portion (31) of the support body (3) by heat sealing.

8. A container (1) as claimed in any of claims 1 to 7, wherein the support body (3) has a frustoconical shape.

9. A container (1) as claimed in any of claims 1 to 7, wherein the support body (3) has a frustopyramidal shape.

10. A container (1) as claimed in any of claims 1 to 9, wherein:
- the bag-like body (2) is made of a compostable biopolymer; and
- the support body (3) is made of a compostable biodegradable paper.

11. A container (1) as claimed in any of claims 1 to 10, wherein the bag-like body (2) is configured to contain a cosmetic cream.

12. A kit for containing semi-liquid substances comprising:
- a container (1) as claimed in any of claims 1 to 11;
- a package (6) comprising a reversibly closable inner cavity (61), the container (1) being adapted to be accommodated in said inner cavity (61).

13. A kit as claimed in claim 12, wherein said package (6) is made of a recyclable material.

14. A kit as claimed in claim 12 or 13, wherein the package (6) extends between a base (62) and an opposite top (63), the inner cavity (61) extending between the base (62) and an upper opening (64) located at the top (63), the package (6) comprising a seat located in the inner cavity (61) at the base (62), a lower portion (31) of the support body (3) being adapted to be stably accommodated in said seat.

## Patentansprüche

1. Behälter (1) zum Enthalten und Ausgeben von halbflüssigen Substanzen, umfassend:
- einen beutelartigen Körper (2), der konfiguriert ist, um eine halbflüssige Substanz zu enthalten, wobei der beutelartige Körper (2) einen Ausgabeabschnitt (23) aufweist, der angepasst ist, um durchbohrt zu werden, um eine Ausgabeöffnung zu definieren;
- einen Stützkörper (3), der aus einem kompostierbaren biologisch abbaubaren Material gefertigt ist, dessen Steifigkeit größer ist als die Steifigkeit des beutelartigen Körpers (2), wobei der Stützkörper (3) außerhalb des beutelartigen Körpers (2) angeordnet ist und mit dem beutelartigen Körper (2) gekoppelt ist, sodass er diesen zumindest teilweise bedeckt, wobei der beutelartige Körper (2) und der Stützkörper (3) komprimierbar sind, um die halbflüssige Substanz durch die Ausgabeöffnung auszugeben, **dadurch gekennzeichnet, dass**:
- der beutelartige Körper (2) aus einem kompostierbaren, biologisch abbaubaren Material gefertigt ist,
- sich der Stützkörper (3) zwischen einem unteren Abschnitt (31) und einem gegenüberliegenden oberen Abschnitt (32) in einer Längsrichtung des Verlaufs (X-X) erstreckt,
- der Stützkörper (3) einen durchgehenden Hohlraum (33) umfasst, der sich zwischen dem unteren Abschnitt (31) und dem oberen Abschnitt (32) erstreckt und durch eine Innenwand (34) des Stützkörpers (3) begrenzt ist.

2. Behälter nach Anspruch 1, wobei sich der beutelartige Körper (2) in der Längsrichtung des Verlaufs (X-X) erstreckt und Folgendes umfasst:
- einen Verschlussabschnitt (21), der sich auf der dem Ausgabeabschnitt (23) in Längsrichtung des Verlaufs (X-X) gegenüberliegenden Seite befindet;
- einen Aufnahmeabschnitt (22), der zwischen dem Verschlussabschnitt (21) und dem Ausgabeabschnitt (23) angeordnet ist und die halbflüssige Substanz enthält.

3. Behälter (1) nach Anspruch 2, wobei der Stützkörper (3) den Aufnahmeabschnitt (22) des beutelartigen Körpers (2) vollständig bedeckt.

4. System (1) nach Anspruch 2 oder 3, wobei:
- der Aufnahmeabschnitt (22) an die Innenwand (34) des Stützkörpers (3) gekoppelt ist, sodass sich der Ausgabeabschnitt (23) des beutelartigen Körpers (2) an dem unteren Abschnitt (31) des Stützkörpers (3) befindet.

5. Behälter (1) nach Anspruch 4, wobei der Aufnahmeabschnitt (22) des beutelartigen Körpers (2) mittels eines klebenden Materials an die Innenwand (34) des Stützkörpers (3) gekoppelt ist.

6. Behälter (1) nach Anspruch 4 oder 5, umfassend einen Spender (4), der an den unteren Abschnitt (31) des Stützkörpers (3) gekoppelt ist, der Spender (4) umfassend mindestens eine Öffnung (41), die es ermöglicht, dass die in dem beutelartigen Körper (2) enthaltene halbflüssige Substanz durch die Öffnung (41) ausgegeben wird.

7. Behälter (1) nach Anspruch 6, wobei der Spender (4) durch Heißsiegeln an den unteren Abschnitt (31) des Stützkörpers (3) gekoppelt ist.

8. Behälter (1) nach einem der Ansprüche 1 bis 7, wobei der Stützkörper (3) eine kegelstumpfförmige Form aufweist.

9. Behälter (1) nach einem der Ansprüche 1 bis 7, wobei der Stützkörper (3) eine pyramidenstumpfförmige Form aufweist.

10. System (1) nach einem der Ansprüche 1 bis 9, wobei:
- der beutelartige Körper (2) aus einem kompostierbaren Biopolymer gefertigt ist; und
- der Stützkörper (3) aus einem kompostierbaren, biologisch abbaubaren Papier gefertigt ist.

11. Behälter (1) nach einem der Ansprüche 1 bis 10, wobei der beutelartige Körper (2) konfiguriert ist, um eine kosmetische Creme zu enthalten.

12. Kit zum Enthalten von halbflüssigen Substanzen, umfassend:
- einen Behälter (1) nach einem der Ansprüche 1 bis 11;
- eine Verpackung (6), umfassend einen reversibel verschließbaren inneren Hohlraum (61), wobei der Behälter (1) angepasst ist, um in dem inneren Hohlraum (61) aufgenommen zu sein.

13. Kit nach Anspruch 12, wobei die Verpackung (6) aus einem recycelbaren Material gefertigt ist.

14. Kit nach Anspruch 12 oder 13, wobei sich die Verpackung (6) zwischen einer Basis (62) und einer gegenüberliegenden Oberseite (63) erstreckt, wobei sich der innere Hohlraum (61) zwischen der Basis (62) und einer oberen Öffnung (64) erstreckt, die sich an der Oberseite (63) befindet, die Verpackung (6) umfassend einen Sitz, der sich in dem inneren Hohlraum (61) an der Basis (62) befindet, wobei ein unterer Abschnitt (31) des Stützkörpers (3) angepasst ist, um stabil in dem Sitz aufgenommen zu sein.

## Revendications

1. Contenant (1) permettant de contenir et de distribuer des substances semi-liquides, comprenant :
- un corps de type sac (2) conçu pour contenir une substance semi-liquide, ledit corps de type sac (2) comportant une partie de distribution (23) adaptée pour être percée afin de définir une ouverture de distribution ;
- un corps de support (3) constitué d'un matériau biodégradable compostable et dont la rigidité est supérieure à la rigidité du corps de type sac (2), ledit corps de support (3) étant agencé à l'extérieur dudit corps de type sac (2) et étant couplé audit corps de type sac (2) de sorte qu'il le recouvre au moins partiellement, le corps de type sac (2) et le corps de support (3) étant compressibles pour distribuer la substance semi-liquide à travers l'ouverture de distribution, **caractérisé en ce que** :
- le corps de type sac (2) est constitué d'un matériau biodégradable compostable,
- le corps de support (3) s'étend entre une partie inférieure (31) et une partie supérieure opposée (32) dans une direction longitudinale de développement (X-X) ;
- le corps de support (3) comprend une cavité traversante (33), qui s'étend entre la partie inférieure (31) et la partie supérieure (32) et est délimitée par une paroi interne (34) du corps de support (3).

2. Contenant selon la revendication 1, dans lequel ledit corps de type sac (2) s'étend dans la direction longitudinale de développement (X-X) et comprend :
- une partie de fermeture (21) située sur le côté opposé à la partie de distribution (23) dans la direction longitudinale de développement (X-X) ;
- une partie contenante (22) interposée entre la partie de fermeture (21) et la partie de distribution (23) et contenant la substance semi-liquide.

3. Contenant (1) selon la revendication 2, dans lequel le corps de support (3) recouvre entièrement la partie contenante (22) du corps de type sac (2).

4. Contenant (1) selon la revendication 2 ou 3, dans lequel :
- la partie contenante (22) est couplée à la paroi interne (34) du corps de support (3) de sorte que la partie de distribution (23) du corps de type sac (2) sera située au niveau de la partie inférieure (31) du corps de support (3).

5. Contenant (1) selon la revendication 4, dans lequel la partie contenante (22) du corps de type sac (2) est couplée à la paroi interne (34) du corps de support (3) au moyen d'un matériau adhésif.

6. Contenant (1) selon la revendication 4 ou 5, comprenant un distributeur (4) couplé à la partie inférieure (31) du corps de support (3), ledit distributeur (4) comprenant au moins une ouverture (41), permettant à la substance semi-liquide contenue dans le corps de type sac (2) d'être distribuée à travers ladite ouverture (41).

7. Contenant (1) selon la revendication 6, dans lequel le distributeur (4) est couplé à la partie inférieure (31) du corps de support (3) par thermoscellage.

8. Contenant (1) selon l'une quelconque des revendications 1 à 7, dans lequel le corps de support (3) présente une forme tronconique.

9. Contenant (1) selon l'une quelconque des revendications 1 à 7, dans lequel le corps de support (3) présente une forme de tronc de pyramide.

10. Contenant (1) selon l'une quelconque des revendications 1 à 9, dans lequel :
- le corps de type sac (2) est constitué d'un biopolymère compostable ; et
- le corps de support (3) est constitué de papier biodégradable compostable.

11. Contenant (1) selon l'une quelconque des revendications 1 à 10, dans lequel le corps de type sac (2) est conçu pour contenir une crème cosmétique.

12. Kit permettant de contenir des substances semi-liquides comprenant :
- un contenant (1) selon l'une quelconque des revendications 1 à 11 ;
- un emballage (6) comprenant une cavité interne (61) pouvant être fermée de manière réversible, le contenant (1) étant adapté pour être logé dans ladite cavité interne (61).

13. Kit selon la revendication 12, dans lequel ledit emballage (6) est constitué d'un matériau recyclable.

14. Kit selon la revendication 12 ou 13, dans lequel l'emballage (6) s'étend entre une base (62) et une partie supérieure (63) opposée, la cavité interne (61) s'étendant entre la base (62) et une ouverture supérieure (64) située au niveau de la partie supérieure (63), l'emballage (6) comprenant un siège situé dans la cavité interne (61) au niveau de la base (62), une partie inférieure (31) du corps de support (3) étant adaptée pour être logée de manière stable dans ledit siège.
